Europäisches Patentamt

European Patent Office

Office européen des brevets

(11) Numéro de publication: **0 392 936**
**A1**

## (12) DEMANDE DE BREVET EUROPEEN

(21) Numéro de dépôt: 90420125.8

(51) Int. Cl.5: **F16L 55/16, F16L 55/172**

(22) Date de dépôt: **09.03.90**

(30) Priorité: **14.03.89 FR 8903957**

(43) Date de publication de la demande:
**17.10.90 Bulletin 90/42**

(84) Etats contractants désignés:
**AT BE CH DE DK ES GB GR IT LI LU NL SE**

(71) Demandeur: **BTR VALVES S.A.**
**30 Rue Jean Jaurès**
**F-42240 Unieux(FR)**

(72) Inventeur: **Butigieg, Guy Laurent**
**20 Rue du 8 Mai 1945**
**F-42270 Saint Priest en Jarez(FR)**

(74) Mandataire: **Dupuis, François**
**Cabinet Charras, 3 Place de l'Hôtel-de-Ville,**
**BP 203**
**F-42005 St. Etienne Cédex 1(FR)**

(54) **Raccord de réparation et/ou d'accouplement pour tuyauteries, canalisations et produits similaires.**

(57) Ce raccord est remarquable en ce qu'il comprend un manchon flexible (1) dont les extrémités (1.1) retournées autorisent l'adaptation, positionnement et fixation de machoires (2), des moyens (3-4) assurant la liaison et serrage du raccord, ledit manchon recevant intérieurement une garniture (5) d'étanchéité sur laquelle est disposée un élément de renfort situé à l'endroit de jonction des extrémités du manchon, ledit élément de renfort (10) étant constitué par une bande métallique de très faible épaisseur constituant une lame ressort et présente sur tout ou partie de ses bordures longitudinales des parties en saillie (10.1) susceptibles de constituer des zones d'ancrage sur le tuyau à réparer ou les tuyaux à accoupler ; ledit élément de renfort assurant en outre la fonction de conduction électrique entre les tuyaux.

FIG.7

EP 0 392 936 A1

L'invention a pour objet un raccord de réparation et/ou d'accouplement pour tuyauteries, canalisations et produits similaires.

L'invention se rattache au secteur technique ces éléments de raccords et d'assemblage de tuyauteries, canalisations et tous produits du même type assurant la distribution de fluides du type eau, gaz et autres.

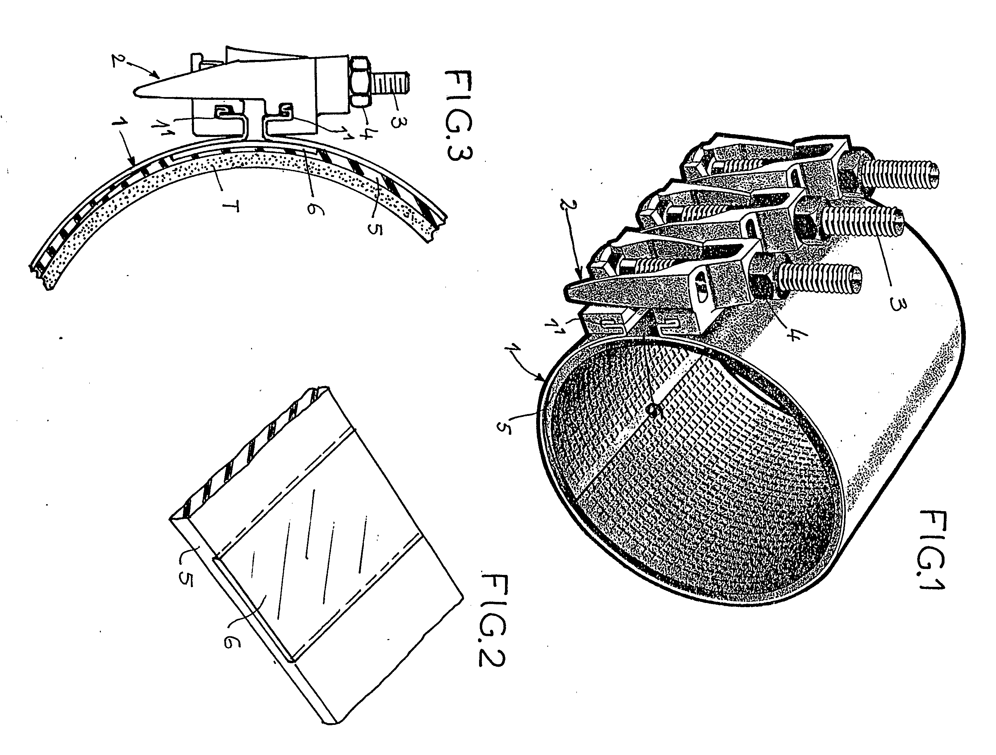

La déposante fabrique et vend déjà des raccords de réparation et d'assemblage dont les caractéristiques sont illustrées aux figures 1 à 3 de la demande. Les raccords trouvent de nombreuses utilisations en cas de détériorations de tuyaux par cassure franche, fissure, trous, ou bien pour des accouplements de tuyaux consécutifs. Ces raccords sont des manchons (1) flexibles constitués d'une ou plusieurs sections de bandes en acier inoxydable auxquelles sont associées des mâchoires (2). Des boulons (3) et écrous (4) montés dans les mâchoires permettent le montage du raccord sur le tuyau endommagé ou sur les tuyaux consécutifs à accoupler. Le raccord présente intérieurement une garniture (5) assurant une étanchéité circonférentielle. Cette garniture est généralement réalisée en un matériau souple du type caoutchouteux susceptible de venir en pression contre le tuyau et/ou les tuyaux à réparer ou accoupler. Ainsi qu'il apparait aux figures 1 et 3, le manchon (1) présente deux collerettes (1.1) à bords retournés à partir desquelles sont disposées les mâchoires précitées. Il convient donc lorsque le manchon doit être fermé et serré autour des tuyaux de disposer partiellement à l'endroit de jonction des extrémités du raccord, un élément de renfort (6) associé à la garniture (5) susceptible de compléter l'étanchéité, et d'assurer une continuité de l'effort de serrage et de pression. Selon la technique actuelle, cet élément de renfort illustré figure 2, est constitué par une bande en acier inoxydable non élastique et présentant une déformation permanente en cas de sollicitation, et dont l'épaisseur est de plusieurs millimètres, généralement de 1 à 2 millimètres.

Cet élément de renfort est surmoulé dans la garniture par vulcanisation, ou est collé sur ou dans un logement conformé sur la garniture.

Un tel raccord est largement exploité de manière très satisfaisante. Cependant, dans le cadre des recherches effectuées par la déposante, il est apparu nécessaire d'apporter des solutions nouvelles pour remédier à certains inconvénients liés à des questions d'adaptation et de montage du raccord et tenant compte de l'environnement d'utilisation.

Actuellement, en effet l'élément de renfort présente une grande rigidité et n'est pas ou peu déformable sauf action mécanique particulière de par le matériau constitutif et de par ses caractéristiques dimensionnelles et en particulier son épaisseur. Il est donc nécessaire de le cintrer c'est-à-dire de le préformer lors de la mise en forme de la garniture susceptible d'être introduite dans le manchon ; on a constaté en pratique que chaque garniture associée à un élément de renfort particulier permet seulement d'être adapté pour une gamme de diamètres de tuyauteries. En outre, l'opération de cintrage est délicate et doit être effectuée au mieux sans dépasser les rayons de courbure admis, car l'élément de renfort serait alors inutilisable. Il y a donc des opérations coûteuses et la nécessité d'une conception de plusieurs garnitures.

On a par ailleurs rencontré un autre inconvénient résultant de l'environnement même de l'utilisation des raccords. Bien que les raccords soient correctement fixés et serrés sur le tuyau à réparer, ou les tuyaux à accoupler, il est nécessaire d'assurer l'ancrage des tuyaux pour les maintenir en position ; il se produit aussi des efforts, des vibrations liées au passage des fluides ou autres nuisances extérieures, ou coups de bélier susceptibles de provoquer le déplacement du raccord de réparation et/ou d'accouplement. De ce fait, ce dernier ne joue plus son rôle. On utilise alors différents éléments rapportés du type tirants qu'il faut monter entrainant des pièces supplémentaires et des coûts en résultant. Par ailleurs, pour assurer la conduction électrique par la mise à la terre, il est nécessaire à l'endroit de position du raccord d'effectuer un pontage entre les tuyaux pour conserver la continuité de la conduction. Le pontage est alors réalisé par l'apport d'une pièce complémentaire conductrice qui est rapportée et insérée dans l'alésage intérieur de la bride et qui relie les tuyaux entre eux. Il y a donc une nouvelle opération de montage et des coûts supplémentaires.

Ainsi un premier but selon l'invention était de concevoir un raccord de réparation et d'accouplement répondant au problème de montage et de cintrage de l'élément de renfort évoqué précédemment.

Un autre but selon l'invention était de concevoir un raccord perfectionné susceptible d'être fixé à position déterminée et définitive et non sujet aux contraintes d'environnement extérieur ou dûes à son utilisation, capable de maintenir les tuyauteries en position sans risque de créer des zones de corrosion apparente.

Un autre but était de simplifier le montage des éléments assurant la continuité de la conduction électrique lors de l'adaptation du raccord.

Ces buts et d'autres encore ressortiront de la suite de la description.

Selon une première caractéristique le raccord est remarquable en ce qu'il comprend un manchon flexible dont les extrémités retournées autorisent l'adaptation, positionnement et fixation de machoires, des moyens assurant la liaison et serrage du raccord, ledit manchon recevant intérieurement une garniture d'étanchéité sur laquelle est disposée un élément de renfort situé à l'endroit de jonction des extrémités du manchon, caractérisé en ce que l'élément de renfort est constitué par une bande métallique de très faible épaisseur constituant une lame ressort.

Selon un autre caractéristique le raccord est remarquable en ce que l'élément de renfort présente sur tout ou partie de ses bordures longitudinales des parties en saillie susceptibles de constituer des zones d'accrochage et d'ancrage sur le tuyau à réparer ou les tuyaux à accoupler, ledit élément de renfort assurant en outre la fonction de conducteur électrique.

Les caractéristiques et d'autres encore ressortiront bien de la suite de la description.

Pour fixer l'objet de l'invention d'une manière non limitative aux figures des dessins où :

- La figure 1 illustre un raccord de réparation et/ou d'accouplement d'éléments de tuyauteries et de canalisations selon la technique actuelle.

- La figure 2 est une vue en coupe partielle à grande échelle illustrant selon l'art antérieur et en particulier les moyens de fermeture du raccord et les moyens contribuant à l'étanchéité de cette fermeture.

- La figure 3 est une vue partielle de la garniture disposée dans le raccord, ladite garniture comprenant un élément de renfort selon l'art antérieur.

- La figure 4 est une vue en plan de l'élément de renfort selon l'invention susceptible de s'appliquer sur la garniture intérieure d'un raccord.

- la figure 5 est une vue en perspective de l'élément de renfort agencé avec des moyens d'ancrage.

- La figure 6 est une vue en coupe transversale illustrant la garniture intérieure agencée avec l'élément de renfort selon l'invention, en position repos et de non sollicitation. Sur cette figure, la garniture est représentée dans un plan linéaire pour faciliter la compréhension et l'intérêt de l'invention, avec partiellement une partie pleine et une partie alvéolée.

- La figure 7 est une vue partielle, à grande échelle montrant le raccord selon l'invention en phase d'utilisation, et en particulier la garniture interne et son élément de renfort en position de sollicitation.

La figure 8 est une vue à caractère schématique illustrant une utilisation possible du raccord en accouplement deux tuyaux.

Afin de rendre plus concret l'objet de l'invention, on le décrit maintenant d'une manière non limitative illustrée aux figures des dessins.

Les différents éléments composant le raccord de réparation et/ou d'accouplement conservent les mêmes références que précédemment indiquées.

L'invention vise donc à réaliser et concevoir un élément de renfort (10) susceptible d'être surmoulé et vulcanisé avec la garniture ou collé sur celle-ci, ledit élément de renfort étant constitué par une bande métallique conductrice, par exemple en tôle inox ou matériaux similaires, de quelques dixièmes d'épaisseur et constituant une lame ressort. Cette bande de tôle est en acier laminé écroui n'ayant pas reçu de traitement de recuit pour conserver ses caractéristiques élastiques de flexibilité et de déformabilité. Ainsi de par cette nouvelle conception de l'élément de renfort la mise en place de la garniture et donc de l'élément de renfort est facile à mettre en oeuvre et adaptable à une gamme beaucoup plus étendue de raccords de diamètre différent. On supprime alors l'opération de cintrage préalable de l'élément de renfort utilisé selon la technique antérieure. En outre, de par sa flexibilité, l'élément de renfort selon l'invention a tendance par réaction mécanique à se détendre et s'appliquer fermement contre les parois du manchon confortant ainsi l'étanchéité avec la garniture qui y est fixée intérieurement.

Selon une autre caractéristique de l'invention, l'élément de renfort (10) présente sur tout ou partie des ses bordures longitudinales des parties en saillies de préférence dentelées (10.1) susceptibles de constituer des zones d'accrochage et d'ancrage après rabattement partiel dans un plan à 90° tournées vers l'intérieur. Ainsi la hauteur de dents peut varier selon les besoins et les caractéristiques de la garniture intérieure sur laquellee l'élément de renfort est fixé. Cette hauteur de dent peut être régulière, dégressive ou progressive. Chaque dent peut être repliée en totalité ou partiellement, ou comme illus tré à son extrémité, ceci en fonction des besoins. Il y a tout d'abord lieu de notėr que le repliage des dents, n'affecte pas la déformabilité élastique de l'élément de renfort, lesdits éléments ne constituant pas un moyen de rigidification longitudinale dudit élément. Aussi et avantageusement le creux de la dent est situé dans la partie plane de l'élément de renfort. En outre la hauteur des parties repliées de chaque dent est inférieure à l'épaisseur de la garniture réceptrice en condition de non sollicitation.

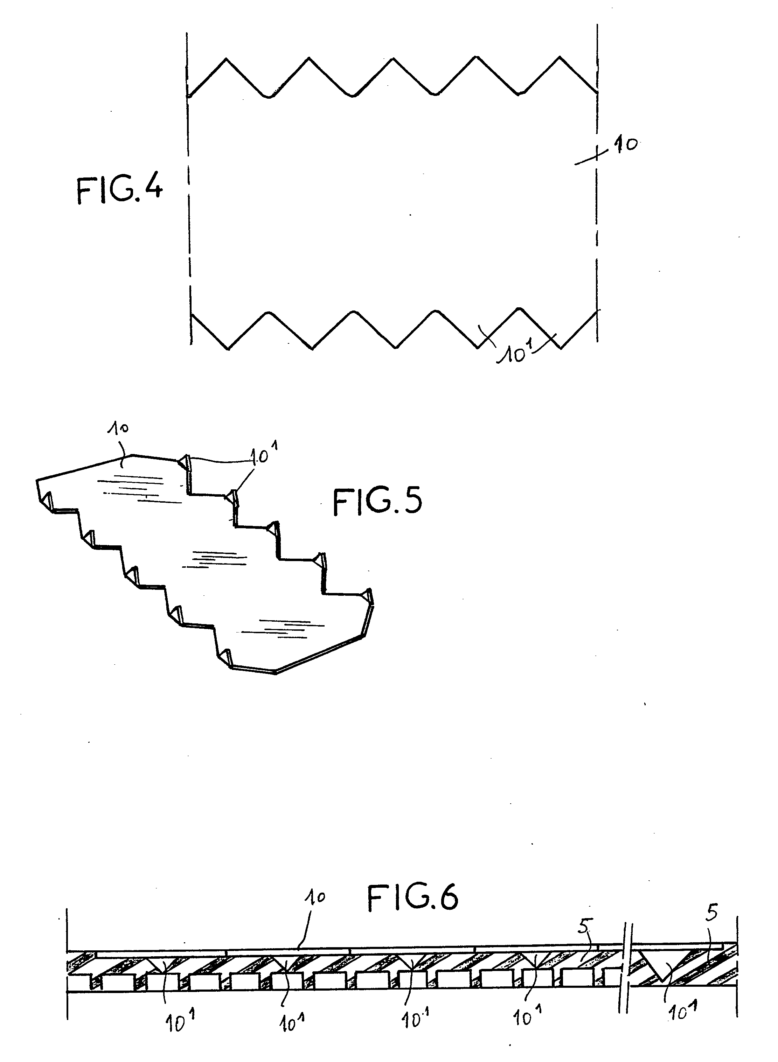

Ainsi qu'il apparait figure 6, l'élément de renfort est donc surmoulé par vulcanisation ou collé sur la garniture. On a illustré autrement par exemple et de manière non limitative une garniture dont la face intérieure présente des alvéoles pour serrer plus facilement les irrégularités de tuyauterie pour s'opposer aux fuites. De cette situation de non sollicitation, les dents ne débouchent pas ou peuvent simplement affleurer le fond des alvéoles. Si la garniture est homogène, c'est-à-dire sans alvéoles, lesdites dents ne débouchent pas en position repos.

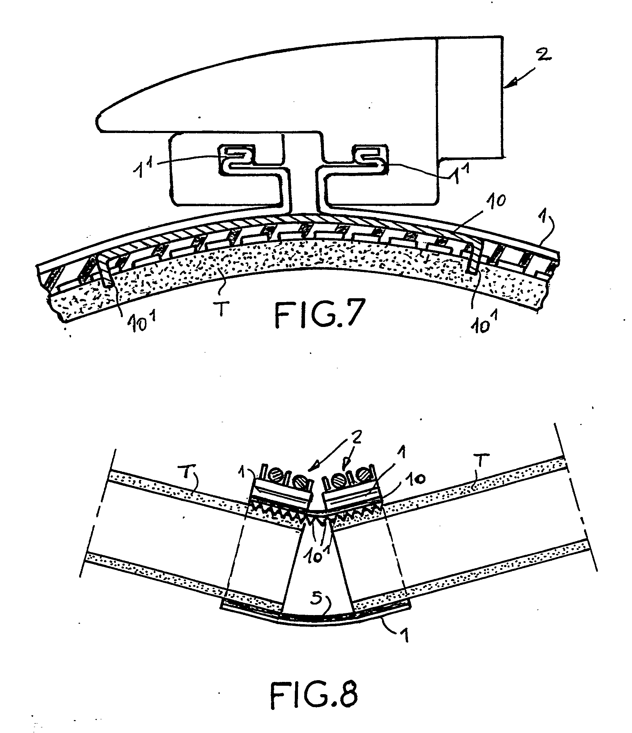

Ainsi qu'il apparait aux figures 7 et 8 des dessins, un avantage important de l'invention réside dans la fonction nouvelle de l'élément de renfort qui assure lors de l'opération de serrage et fermeture du raccord, un ancrage de certaines parties de l'élément de renfort (10) dans les parties de tuyauterie à réparer et/ou à accoupler. En effet, par l'effet de serrage, la garniture est comprimée et par déformation elle laisse apparaitre partiellement les extrémités des dents ou autres moyens de saillies qui pénètrent alors et s'ancrent dans les tuyaux. En outre, l'élément de renfort qui est conducteur électrique assure lui-même une troisième fonction qui est d'assurer la continuité de ladite conduction avec les tuyaux réparés ou accouplés. Dans ces conditions, le raccord selon l'invention est apte à être indépendant de toutes contraintes et paramètres extérieurs ou intérieurs liés à l'environnement et à l'utilisation des tuyaux en limitant et réduisant au maximum le nombre des pièces néces saires pour effectuer toutes les fonctions. La liaison obtenue est suffisante pour s'opposer aux effets de vibrations et chocs précédemment évoqués. Il est bien évident que le matériau constitutif de l'élément de renfort (10) est apte à permettre l'ancrage de dents sur tous tuyaux quelles que soient les matériaux de ceux-ci. Il n'est pas exclu également de procéder à un traitement partiel de l'éxtrémité des dents pour renforcer leurs caractéristiques de dureté.

On a représenté figure 8 à titre non limitatif un exemple d'utilisation possible de raccord en vue de la liaison de deux tuyaux désalignés. Les caractéristiques de l'élément de renfort selon l'invention permettent dans cette utilisation particulière des angulations assez prononcées des tuyaux à joindre. En outre, on a illustré l'ancrage des dents et autres moyens de saillies conformés avec l'élément de renfort.

Les avantages ressortent bien de l'invention. On souligne tout d'abord la simplicité de conception et de fabrication de l'élément de renfort, la facilité d'adaptation de la garniture dans des manchons de diamètres différents, la meilleure étanchéité dûe à la réaction de l'élément de renfort, la solidité de la liaison est obtenue du raccord par l'ancrage supplémentaire et la continuité de la conduction électrique, tous ces fonctions étant assurées par un seul moyen à savoir l'élément de renfort (10).

## Revendications

-1- Raccord de réparation et/ou d'accouplement pour tuyauteries, canalisations et produits similaires, du type comprenant un manchon flexible (1) dont les extrémités (1.1) retournées autorisent l'adaptation, positionnement et fixation de machoires (2), des moyens (3-4) assurant la liaison et serrage du raccord, ledit manchon recevant intérieurement une garniture (5) d'étanchéité sur laquelle est disposée un élément de renfort situé à l'endroit de jonction des extrémités du manchon, caractérisé en ce que l'élément de renfort (10) est constitué par une bande métallique de très faible épaisseur constituant une lame ressort.

-2- Raccord selon la revendication 1 caractérisé en ce que l'élément de renfort (10) est constitué par une bande de tôle inox, en acier laminé écroui.

-3- Raccord selon l'une quelconque des revendications 1 et 2 caractérisé en ce que l'élément de renfort présente sur tout ou partie de ses bordures longitudinales des parties en saillie (10.1) susceptibles de constituer des zones d'accrochage et d'ancrage sur le tuyau à réparer ou les tuyaux à accoupler ; ledit élément de renfort assurant en outre la fonction de conduction électrique entre les tuyaux.

-4- Raccord selon la revendication 3 caractérisé en ce que les parties en saillie formées sur les bordures longitudinales de l'élément de renfort sont des dents rabattues dans un plan à 90° tourné vers l'intérieur, en pénétrant dans la garniture d'étanchéité (5).

-5- Raccord selon la revendication 4, caractérisé en ce que la hauteur des dents est régulière et/ou dégressive et/ou progres sive.

-6- Raccord selon la revendication 4 caractérisé en ce que en position de non sollicitation du manchon les dents ne débordent pas de la garniture d'étanchéité et en ce que en position de sollicitation lesdites dents débordent de la garniture pressée en viennent en ancrage et accorchage sur le ou les tuyaux en assurant la conduction électrique.

-7- Raccord selon la revendication 4 caractérisé en ce que les extrémités des dents subissent un traitement de dureté.

-8- Raccord selon la revendication 4 caractérisé en ce que le creux de chaque dent est situé dans la partie plane de l'élément de renfort.

FIG.1

FIG.2

FIG.3

FIG.4

FIG.5

FIG.6

FIG.7

FIG.8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0064150 (ROCKWELL INTERNATIONAL CORPORATION) <br> * page 7, lignes 30 - 34; figure 1 * <br> --- | 1, 2 | F16L55/16 <br> F16L55/172 |
| A | US-A-3914833 (PAUL GEORGE DUNMIRE) <br> * colonne 3, lignes 4 - 16; figure 1 * <br> --- | 1, 2 | |
| A | US-A-4409708 (WILLIAM L. HAUFFE) <br> * colonne 5, lignes 15 - 38; figure 1 * <br> --- | 1, 2 | |
| A | US-A-3737959 (TELFORD L.SMITH ET AL.) <br> * colonne 2, lignes 28 - 48; figure 2 * <br> --- | 1, 2 | |
| A | DE-B-1650190 (SMITH-BLAIR INC.) <br> * colonne 4, lignes 10 - 43; figure 1 * <br> ----- | 1, 2 | |

**DOMAINES TECHNIQUES RECHERCHES (Int. Cl.5)**

F16L

Le présent rapport a été établi pour toutes les revendications

| Lieu de la recherche | Date d'achèvement de la recherche | Examinateur |
|---|---|---|
| BERLIN | 15 JUIN 1990 | SCHAEFFLER C.A.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)